# EUROPEAN PATENT APPLICATION

(11) **EP 3 955 456 A1**
(43) Date of publication of application: **16.02.2022**
(21) Application number: 21190676.3
(22) Date of filing: 10.08.2021
(51) Int. Cl.: H02S 10/40, H02S 20/22, H02S 20/30, H02S 30/10, H02S 30/20

(54) **SOLAR PANEL DEVICE AND INSTALLATION METHOD**

(30) Priority: 12.08.2020 NL 2026260
(71) Applicant: Bob Kiezebrink Research & Development B.V., 3852 MB Ermelo (NL)
(72) Inventor: KIEZEBRINK, Popke, Lammert, Sjoerd, 3852 MB ERMELO (NL)
(74) Representative: EP&C

(57) **Abstract**

The invention relates to retaining solar panel (100) on a structure having a roof (2) and a side wall (3) adjoining said roof in a corner region (2a) thereof. A solar panel device thereto comprises a base frame (110) for positioning on the structure such that an upper base frame part (111) extends along and is supported on the roof, and a lower base frame part (112) extends along the side wall. The lower base frame part adjoins the upper base frame part in a corner (113) of the base frame, embodied so that when the device is positioned on the structure, the corner of the base frame is adjacent the corner region, and so that the lower part of the base frame is suspended from the upper base frame part. The device further comprises an inward and outward panel frame (131, 132) for retaining (a) solar panel(s), supported by respectively the upper and lower base frame part such as to extend respectively above the roof at an upper angle with the roof away from the corner of the base frame, and at a lower angle with the side wall away from the corner of the base frame.

## Description

The invention relates to a solar panel device to be positioned on a structure having a roof and a side wall. The solar panels produce electricity out of solar irradiation onto the photovoltaic cells. The structure may be any building structure with a roof and a side wall, e.g. a temporary and/or modular building, e.g. as commonly used on a construction site. The building can also be a permanent building, e.g. a factory, sports venue, etc.

The device according to the invention is in particular envisaged for use on building structures to be used on a construction site. Commonly, the local production of electricity on construction sites is desired for the absence of a suitable grid connection and/or in view of the need to decrease emissions when producing electricity on construction sites, which is often done by means of generators running on fossil fuels, e.g. diesel generators. The latter is, for example, done in view of to increased regulations imposed by governments. These solar panels may be temporarily installed on structures present on the construction site, e.g. ISO containers, trailers, or other temporary building structures.

Portable trailer-mounted solar panel devices are known, e.g., from US4421943, US5969501, and WO2014/186345. These devices comprise mounting elements to secure the device including the solar panels on the roof and/or side wall of the structure.

These prior art devices are not satisfactory. For example, the use thereof poses undue requirements on the mechanical properties of the structure on which they are positioned, e.g. strength and rigidity - in particular of the roof and/or side wall thereof. The mounting of these devices is essential for their support on the structure. When used on structures with less mechanical strength and stiffness, such as wooden and/or lightweight structures, these structures are generally not designed to withstand the unfavorable mechanical loads of these devices, and their use thereon may lead to damage or failure of these structures.

The present invention aims to provide retainment of solar panels on a structure wherein the mechanical loading on the structure is more favorable.

The invention relates to a solar panel device according to claim 1.

In relation to the invention, the terms inward and outward are to be interpreted in relation to the structure on which the device is placed. Therein an inward direction is in a top view of the structure from the side wall and corner region towards a center of the structure, and an outward direction from the side wall and corner region away from the structure.

The invention enables to position the device such as to extend along both the roof and the side wall - whereas prior art devices extend over the roof only. The support of the solar panels is essentially distributed over a relatively strong part of the construction of the structure, in particular encompassing the corner region thereof. The distribution of the load, e.g. weight and any wind forces, by means of the base frame of the device leads to an evening out of the mechanical stresses over the construction, and to a reduction of the magnitude of the stress encountered per unit of area. Furthermore, the corner region is a generally stronger part of the structure than an area further away from the corner region of a wall or a roof - so that having the base frame of the device extend around such corner region facilitates the absorption of the load caused thereby.

In a preferred embodiment, the upper and lower base frame parts are aligned with or parallel to the roof and the wall, respectively, wherein the corner of the base frame is placed against the roof edge, where the roof adjoins the side wall.

In embodiments, the base frame parts being elongate and extending away from the corner adds further length to the interface and contributes to the stability of the support of the device on the structure.

For example, the upper and lower base frame parts of the device are each dimensioned to extend over a major part of a structure on which it is to be positioned, e.g. an ISO container, for example over at least a quarter, preferably at least a third, more preferably at least half of respectively the length of the roof and height of the side wall.

When positioned on the structure, the lower base frame part is essentially suspended from the upper base frame part.

In an example, the base frame is adapted to establish additional surface friction between the structure and the base frame, e.g. by a rough surface, e.g. by one or more friction pads.

The weight of the panel frames and the solar panel(s) determines the location of the center of gravity of the whole device, and depends on the upper and lower angles between the panels and respectively the roof and sidewall.

In the present invention, the base frame may facilitate counterbalancing a moment around the roof edge due to the weight of the outward panel frame and panels retained therein.

The device according to the invention may be considered to have a two-layered construction, the first layer being formed by the base frame in contact with the structure, and the second layer by the panel frames retaining the solar panels. The first layer having the function of supporting the device onto the structure, and the second layer being supported onto the first layer in a way such that the solar panels are directed at a desired angle towards the sun. The downwards extension of the lower base frame part from the corner enables that the outwards panel part is supported at a location at a distance well below the corner, on a part of the device itself, namely the lower frame part, for example by means of a spacer member between the outwards panel part and the lower frame part. This eliminates the need for vertical support thereof directly onto the side wall, alike in US5969501, which is unfavorable in view of material stresses in the side wall, or onto a part of the device extending outwardly from the frame at the roof edge, alike in WO2014/186345, which leads to an unfavorable moment of the frame around the roof edge due to the small moment arm of this part - in turn resulting in unfavorable loading of the structure as well.

The two-layered construction may benefit fire safety of the device, e.g. in view of requirements for the construction of the roof and/or wall on which the device is arranged. For example, in a suitable embodiment, even in collapsed condition, the solar panels remain sufficiently spaced from the roof or side wall in view of fire safety.

Having the upper frame part extend inwards from the corner further, and the lower frame part extend downwards from the corner further, enables to support respectively the inwards and outwards panel frame at a larger distance from the corner. Preferably, the lower frame part extends downwardly over at least a major part of the downwards extension of the outwards panel frame, preferably over substantially over its whole downwards extension. In this way the outwards panel frame may advantageously be supported further downwards on the lower base frame part.

In an embodiment, the lower base frame part is attached or attachable to the upper base frame part. The base frame corner is therein formed by an upper attachment portion of an outwards end of the upper base frame part, e.g. outwardly protruding beyond the roof edge when the device is positioned thereon, and a lower attachment portion of a top end of the lower base frame part, e.g. upwardly protruding above the roof edge.

In an embodiment, the inwards and/or outwards panel frames are attached to the base frame by means of a pivot mechanism such as to be pivotal relative to the base frame around a respective horizontal pivot axis to adjust the upper and/or lower angle, respectively, e.g. by means of a hinge along the respective horizontal pivot axis. The effect is that the solar panels retained by the frame are directable towards a desired angle relative to the solar irradiation.

In an embodiment the pivot mechanism comprises an upper pivot mechanism by means of which the inward panel frame is attached to the upper base frame part for adjusting the upper angle, and/or a lower pivot mechanism by means of which the inward panel frame is attached to the upper base frame part for adjusting the lower angle.

In an embodiment the device comprises an upper spacer member at a location horizontally spaced from the corner, extending between the inward panel frame and the upper part, for maintaining a vertical spacing there between at that location, and therewith, the upper angle between the roof and the inward panel frame. Similarly the device may comprise a lower spacer member at a location vertically spaced from the corner, extending between the outwards panel frame and the lower part for maintaining a horizontal spacing there between at that location, and therewith, the lower angle between the side wall and the outward panel frame. Preferably, the device comprises both the upper and lower spacer members. The spacer members may for instance be in the form of elongate rods or beams, pivotally connected at longitudinal ends to the respective panel frame and the base frame part. The spacer members provide support of the frame panel parts onto the respective base frame parts, forming an interconnection between the two layers of the device construction.

In an embodiment the spacer members are configured to maintain the upper and lower angles such that these are complementary to one another, so that the inward and outward panel frames lie in the same plane relative to the roof. This configuration enables the solar panels mounted inside the panel frames to extend in a planar array. The solar panels in both the outwards and inwards panel parts can both be placed at an angle which is favorable with respect to the irradiation angle of the sun, without the risk of casting shadows onto one another. Preferably the spacer members are configured to maintain a range of complementary upper and lower angles, so that the angle of the planar array relative to the roof may be adjusted to direct the panels depending on the angle of the solar irradiation.

In an embodiment with the spacer members, an end section of the upper spacer member is mounted to the upper base frame part, such as to be slidable horizontally along the upper base frame part and/or the inward panel frame for maintaining different upper angles. Similarly, an end section of the lower spacer member may be mounted to the lower base frame part, such as to be slidable vertically along the lower base frame part and/or the outwards panel frame, for maintaining different upper and/or lower angles. Another option to enable the maintaining of different upper and lower angles is for example to embody the spacer members as extendible spacer members, e.g. telescoping spacer members.

In an embodiment, the inward and outward panel frame are integral with each other to form one panel frame, which is connected or connectable to at least the upper base frame part.

In an embodiment, the inwards and outwards panel frames are each pivotable by means of the pivot mechanism into
- an extended position thereof in which the inward or outward panel frame defines the upper or lower angle, respectively, and
- a collapsed position in which the inward or outward panel frame is aligned with the upper or lower base frame part, respectively, and when present, the upper or lower spacer member is also aligned therewith, respectively.

In the collapsed position, the panel frames and the respective base frame parts have a flat planar shape, so as to take up less space - which may benefit storage, transport, and handling, and when positioned on the structure, advantageously reduce susceptibility of the devices to the wind. Furthermore, the devices may be more easily stacked on top of each other during storage and transport.

In an embodiment, the base frame is configured such that, when the device is positioned on a structure with a horizontal roof and a vertical side wall, the upper base frame part and the lower base frame part extend substantially perpendicular to each other, so that the base frame aligns with the roof and the side wall. In another embodiment the base frame parts define an obtuse angle there between, such that the base frame aligns with a structure with a slanted roof and a vertical side wall. As discussed, such close alignment favors the division of mechanical stresses in the structure.

In an embodiment, the angle between the base frame parts may be adjustable, e.g. the corner of the base frame forming a horizontal hinge, e.g. embodied to allow fixation of the angle after setting. In this embodiment the base frame may be fitted onto structures with a range of different angles between the side wall and the roof, e.g. on a roof having an incline.

In an embodiment, the base frame is configured to define a fixed angle between the upper base frame part and the lower base frame part, e.g. a perpendicular angle or e.g. an obtuse angle. In an embodiment with the attachment portions of the base frame parts in the corner, these form a rigid interconnection for defining such fixed angle. The upper and lower frame parts defining a fixed angle, makes that when the device is positioned on the structure, the lower vertical part of the base frame restricts a horizontal movement of the base frame towards the side wall. This may reduce susceptibility to frontal winds, and facilitate counterbalancing any force moment of the device around the roof edge - especially in combination with (additional) surface friction between the base frame and the structure.

In an embodiment, the base frame is monolithic. This embodiment may be of advantage for a permanent installation on a structure.

In an embodiment, the device is configured to be mounted, preferably, detachable mounted, on the structure, the horizontal upper part of the base frame comprising mounting elements for mounting the base frame to the roof of the structure and optionally, the lower vertical part of the base frame comprising mounting elements for mounting the base frame to the side wall of the structure. Mounting the device to the structure may decrease the susceptibility of the position of the structure to wind, e.g. horizontally directed gusts, and/or a possible sliding of the device from the roof - in particular a slanted roof. These mountings not having the function of supporting the weight of the device, makes that the mechanical stresses in the structure are still reduced when compared to the prior art devices - wherein these mountings do have this function.

In an embodiment, the device further comprises the one or more solar panels, the solar panels being mounted within the panel frames.

In an embodiment, the upper and lower attachment portion are formed by complementary slanted portions of the upper base frame part and of the lower base frame part respectively, which, when the device is positioned on the structure, adjoin one another. By means of these slanted portions, the upper and lower base frame part may be interconnected or interconnectable. The upper and lower attachment portions in the corner are preferably in particular formed by complementary slanted portions of the outwards end of the upper base frame part and the top end of the lower base frame part which, when positioned on the structure, extend upwards from the roof. For their interconnection in the corner, the upper and lower attachment portion may be provided with one or more mounting elements, e.g. alignable holes for releasable fasteners, e.g. for bolt and nut fasteners. For example in particular the slanted portions may be provided with these mounting elements, e.g. alignable holes.

The slanted portions provide a simple and robust means for interconnection of the two base frame parts. Furthermore, it facilitates the possibility to make the base frame parts identical to one another - to the advantage of an efficient production process, transport and storage. A particularly practical embodiment thereto provides that the slanted portions run in the corner upwardly from the roof edge to equally divide the outwards angle between the roof and the side wall. For example, when the base frame parts define a perpendicular angle in the corner, the slanted portions run upwardly at an angle of 45 degrees from the plane of the roof. In case of an obtuse angle of 120 degrees, the upwards angle may be 60 degrees, etc.

In an embodiment, the horizontal width of the base frame is equal to or smaller than the horizontal width of the panel frames. The effect is that the devices may be juxtaposed in the width direction without interspaces - so as to enable optimal occupation of the available width of the structure by solar panels catching solar irradiation. Furthermore, this facilitates the possibility to provide lateral, i.e. in the width direction, interconnection of the devices into an assembly of juxtaposed devices by interconnecting these either at the interface of the adjacent panel frames or the adjacent base frames.

In an embodiment, the device, e.g. the base frame thereof, comprises attachment portions provided with mounting elements for lateral attachment to similar or identical devices, e.g. detachable attachment, e.g. bolt holes, to form an assembly of multiple laterally juxtaposed devices. Therein preferably the horizontal width of the base frame is equal to or smaller than the horizontal width of the panel frames. This embodiment facilitates a modularity of the solar panel retainment, so that an assembly of devices may be dimensioned to fit a large range of dimensions of structures to maximize the effective area of solar panels retained. Furthermore, the lateral attachment securing the devices relative to one another provides stability of their positions on the roof, restricting, e.g. preventing, any relative mutual movement.

In an embodiment, the device consists of two solar panel units, wherein one unit is formed by the upper base frame part, the inward panel frame, and when present, the upper pivot mechanism and the upper spacer member, and the other unit is formed by the lower base frame part, the outward panel frame, and when present, the lower pivot mechanism and the lower spacer member. The two solar panel units are interconnected or interconnectable at the corner to form the device, e.g. interconnected or interconnectable by means of the attachment of the base frame parts as described before. In this way, the units may be separately produced, assembled and transported prior to installation on the structure - which may benefit efficient production and the efficient use of space during storage and transport. Furthermore, it may reduce the weight and size of the units for more convenient handling thereof. For example the units may be lifted onto the structure separately, so that a smaller lifting capacity is needed, e.g. a smaller capacity crane. In a particularly preferred embodiment, the two units are interconnectable by only an interconnection of the base frame parts via the attachment portions in the corner. This enables that the attachment of the base frame parts is the only step needed for assembling the device out of the two units. The attachment of the two units may for example be done on-site, after separate transport of the units, prior to lifting it onto the structure. It may also be done after separate positioning of the one unit onto the roof and subsequent positioning of the other unit along the side wall, while being held in position e.g. by the lifting device, for example by a person on the roof, e.g. bolting the attachment portions together by hand, or e.g. by an automatic torque wrench.

In an embodiment, the two solar panel units are identical. This may benefit an efficient production process, as the number of different parts to be produced is limited. Furthermore, the assembly is simplified as each unit is to be made up by the same parts. The risk for accidental mixing up of parts belonging to different units is avoided and the need to keep them apart is eliminated. Furthermore, after production of the units, there is no difference between the units to be placed on the roof or along the side wall - so that keeping them apart is not necessary. Any accidental mixing up of the units during transport or during installation on-site is avoided in all.

A preferred embodiment of the device consisting of two identical solar panel units furthermore provides that the base frame parts are interconnectable by means of the slanted portions as discussed before, and that these furthermore form the only interconnection between the units. This embodiment provides a particularly robust interconnection, while benefiting an efficient transport and installation procedure.

The base frame may be configured to provide channels for guiding cables running from the solar panels retained by the panel frames - the base frame parts for example comprising hollow beams, for example in an inwards direction along the roof or side wall, for interconnection with remote parts of the photovoltaic system.

The invention furthermore relates to a separate solar panel unit for use in an device according as discussed herein, connectable to another solar panel unit to form the device - preferably an identical solar panel unit.

The invention furthermore relates to an assembly of multiple devices as discussed herein, preferably wherein the base frame has the same or a smaller width than the panel frames. In the assembly the multiple devices are laterally interconnected or interconnectable, e.g. detachably interconnected, by means of adjoining lateral attachment portions provided with mounting elements, e.g. holes for detachable fasteners, e.g. alignable bolt holes, of the devices, e.g. lateral attachment portions of the base frames of the devices.

The invention furthermore relates to a method for installing one or more solar panels on a structure having a roof and a side wall, wherein use is made of the device, or initially the separate units, as described herein.

In a method according to the invention, use of is made of a device according to the invention consisting of two solar panel units as described herein - wherein one unit is formed by the upper base frame part, the inward panel frame, and when present, the upper pivot mechanism and the upper spacer member, and the other unit is formed by the lower base frame part, the outward panel frame, and when present, the lower pivot mechanism and the lower spacer member. The method comprises:
- lifting, e.g. by means of a crane, a first unit and placing said first unit on the roof of the structure,
- lifting, e.g. by means of a crane, the second unit, and bringing said second unit in an orientation along the sidewall of the structure and so that the lower base frame part adjoins the upper base frame part in a corner of the base frame, which corner is positioned adjacent the corner region of the structure,
- interconnecting, e.g. releasably interconnecting, the lower part of the base frame to the upper base frame part, so that the lower part of the base frame is suspended from the upper base frame part.

In another method according to the invention, use is made of a device as described herein which is placed on the structure in one piece. This method comprises:
- lifting the device, e.g. by means of a crane, until the upper base frame part is above the roof,
- subsequently placing the upper frame part on top of the roof, such that the corner adjoins the roof edge, the upper frame part extends along the roof, e.g. aligned therewith, and the lower base frame part along the side wall, e.g. aligned therewith.

If the interconnection of the units is done prior to lifting, a larger lifting capacity is needed - however interconnection may be done on the ground which may be practical in some situations. If done after, a smaller lifting capacity is needed.

In an embodiment of either of these methods, the method is devoid of mounting the device to the structure.

In an embodiment, use is made of a device having the collapsed and extended positions of the panel frames, wherein the method comprises:
- transporting the module with the frame panel parts in the collapsed position thereof prior to lifting the (units of) the device, and
- pivoting the inwards and/or outward panel frames by means of the pivot mechanism into the from the collapsed position into the extended position thereof.
The pivoting may be done prior to or after positioning on the structure.

The method optionally comprises interconnecting the base frame parts of two solar panel retainer units of the device in the corner by means of the mounting elements of the upper and lower attachment portions, such as to form a solar panel retainer module, as described.

In an embodiment, use is made of an assembly of a multiplicity of the solar panel devices.The forming of the assembly may be done prior to or after lifting. If done prior, a larger lifting capacity is needed - however interconnection may be done on the ground which may be practical in some situations. If done after, a smaller lifting capacity is needed. Preferably, the devices of the assembly are interconnected by interconnecting the base frames thereof. Preferably these base frames have the same or a smaller width as the panel frames.
In an embodiment, the method comprises:
- forming the assembly by laterally interconnecting multiple devices,
- lifting the assembly, e.g. by means of a crane, until the upper base frame parts of the interconnected modules are above the roof,
- subsequently placing the upper frame parts on top of the roof, such that the corners adjoin the roof edge, the upper frame parts extending along the roof, e.g. aligned therewith, and the lower base frame parts along the side wall, e.g. aligned therewith.

The invention furthermore relates to a structure having a roof and a side wall adjoining said roof in a corner region of the structure, wherein the structure is provided with a solar panel device as described herein. Therein the structure may be a portable and/or modular building, e.g. located at a construction site.

The invention will now be described with reference to the appended figures, in which like reference symbols designate like parts. Therein,
- Figure 1: shows a side view of a solar panel device according to the invention while positioned on a structure;
- Figure 2: shows the same solar panel device of Figure 1, showing the inward and outward panel frame thereof in both an extended and collapsed position;
- Figure 3: shows in a perspective view the same solar panel device while positioned on the structure;
- Figure 4: shows in a perspective view a magnification of a detail of the device;

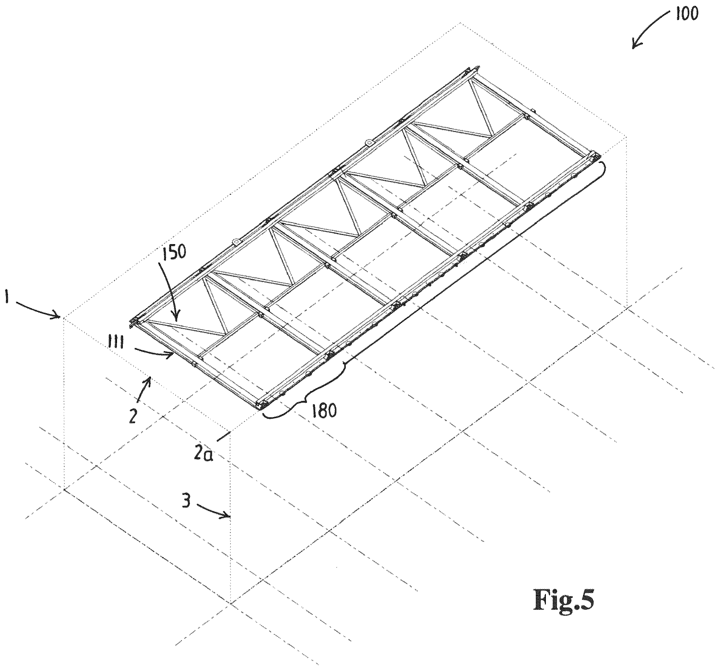

- Figure 5: shows in a perspective view the device according to the invention, with the panel frames thereof in a collapsed position.

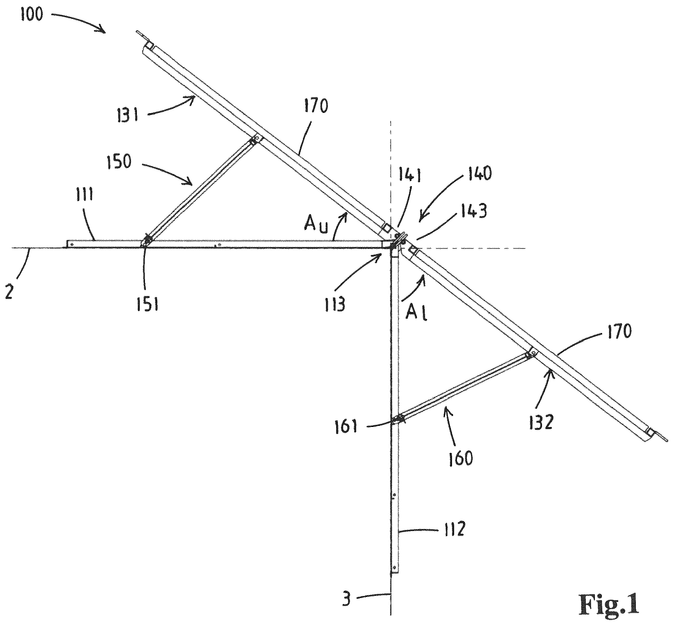

In figure 1 is shown a solar panel device 100 according to the invention, which is configured to be positioned on a structure 1 having a roof 2 and a side wall 3 adjoining said roof 2 in a corner region 2a of the structure 1. The structure 1 may be portable and/or modular building, e.g. located at a construction site. Here, it is represented simply as a cube to most clearly illustrate the device 100 according to the invention.

The solar panel device 100 comprises a base frame 110 that is configured to be being positioned on the structure 1 such that an upper part 111 of the base frame 110 extends along and is supported on the roof 2 of the structure 1, namely parallel therewith, and such that a lower part 112 of the base frame 110 extends along the side wall 3 of the structure 1, namely parallel therewith.

The lower base frame part 112 adjoins the upper base frame part 111 in a corner 113 of the base frame 110. The corner 113 is embodied so that when the device 100 is positioned on the structure 1, the corner 113 of the base frame 110 is adjacent the corner region 2a of the structure, and so that the lower part 112 of the base frame 110 is suspended from the upper base frame part 111.

The solar panel device 100 further comprises an inward panel frame 131 that is configured to retain, or that retains, one or more solar panels 170, the inward panel frame 131 is attached to the upper base frame part 111 such that when the device 100 is positioned on the structure 1, the inward panel frame 131 extends above the roof 2 at an upper angle Au with the roof away from the corner 113 of the base frame 110.

The solar panel device 100 further comprises an outward panel frame 132 that is configured to retain, and here also retains, one or more solar panels 170. The outward panel frame 132 is attached to the lower base frame part 112 such that when the device 100 is positioned on the structure 1, the outward panel frame 132 extends at a lower angle A_{L} with the side wall 3 away from the corner 113 of the base frame 110.

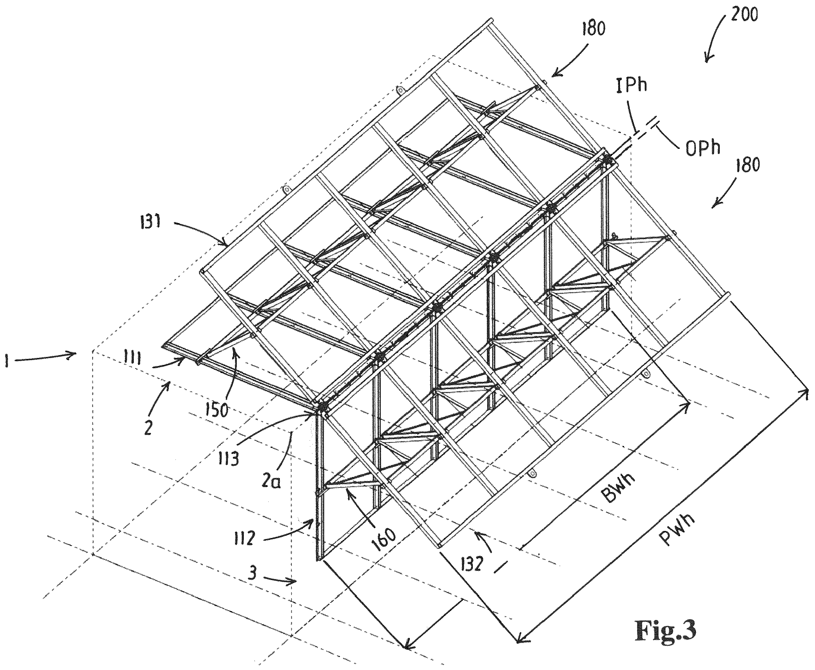

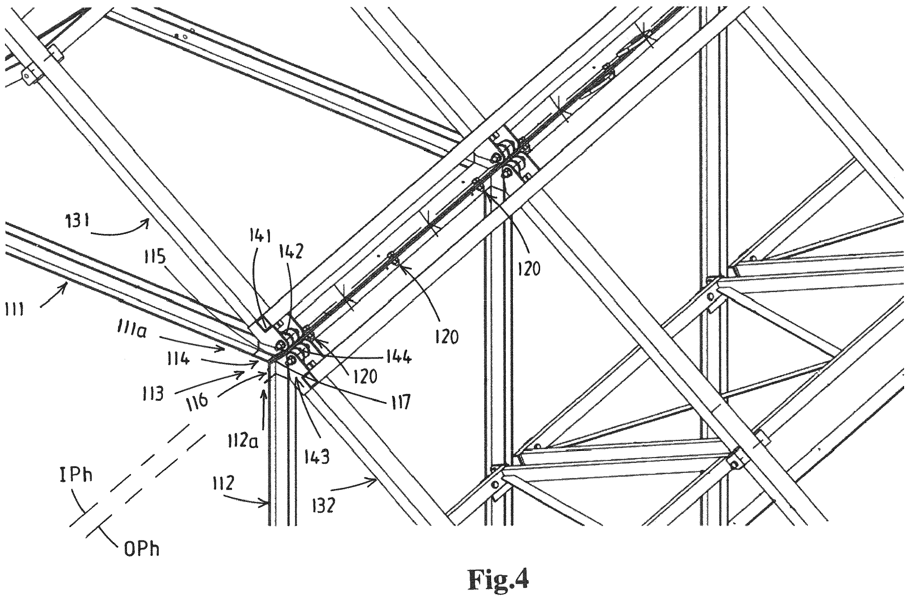

The inward and outward panel frames 131, 132 are each attached to the respective base frame part 111, 112 by means of an upper and lower pivot mechanism, 141 and 143 respectively, namely by means of a horizontal axis hinge 142, 144, shown in detail in figure 4, such as to be pivotal relative to the respective base frame part 111, 112 about respectively an inward and outward horizontal pivot axis, IP_{H} and OP_{H} - shown in perspective in Figures 3 and 4). The inward and outward horizontal pivot axes IP_{H} and OP_{H} extend parallel to the corner 113 of the base frame 110 in proximity of the corner 113 of the base frame 110, in order to adjust the upper angle Au and/or lower angle A_{L}, respectively.

The device 100 is shown to comprise an upper spacer member 150 at a location horizontally spaced from the corner 113 of the base frame 110. The upper spacer 150 extends between the inward panel frame 131 and the upper frame part 111, for maintaining a vertical spacing there between at that location, and therewith, maintaining the upper angle Au.

The device 100 is shown to comprise a lower spacer member 160 at a location vertically spaced from the corner 113. The lower spacer member 160 extends between the outward panel frame 132 and the lower frame part 112 for maintaining a horizontal spacing there between at that location, and therewith, maintaining the lower angle A_{L} .

As shown, an end section 151 of the upper spacer member 150 is mounted to the upper base frame part 111, such as to be slidable horizontally along the upper base frame part 111 for maintaining different upper angles. Similarly, an end section 161 of the lower spacer member 160 is mounted to the lower base frame part 112 such as to be slidable vertically along the lower base frame part 112, for maintaining different upper and lower angles. The opposite end sections of the spacer members 150, 160 are pivotally connected to the respective panel frames 131, 132, see figure 4.

In the embodiment shown in figure 1, the base frame 110 is configured such that, when the device 100 is positioned on a structure 1 with a horizontal roof 2 and a vertical side wall 3, the upper base frame part 111 and the lower base frame part 112 extend substantially perpendicular to each other, so that the base frame 110 aligns with the roof 2 and the side wall 3.

The solar panels 170 as shown in figure 1 are mounted in the inward and outward panel frames 131 and 132, respectively. Alternatively, it may be envisaged that one or more solar panels 170 may be mounted in only one of the inward or outward panel frames 131, 132, or on one or both of the inward or outward panel frames 131, 132.

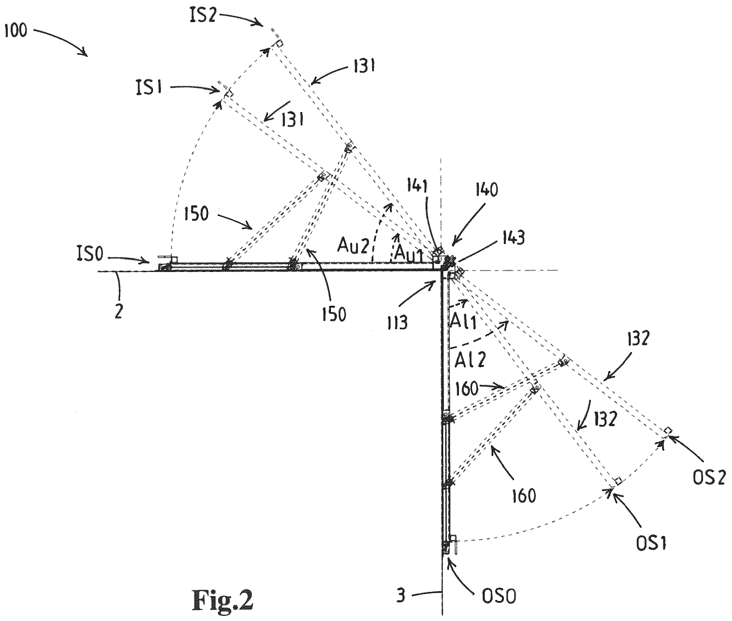

The inward and outward panel frames 131, 132 are each pivotal by means of the pivot mechanism 140 into:
- an extended position thereof, an example shown in figure 1, in which the inward or outward panel frame 131, 132 defines the upper or lower angle, Au or A_{L} respectively, and
- a collapsed position, an example shown in figure 2, in which the inward or outward panel frame 131, 132 is aligned with the upper or lower base frame part 111, 112, respectively.

The shown embodiment is in fact pivotal in multiple extended positions. In figure 2 is shown the same solar panel device, for which the inward panel frame 131 is shown in a collapsed position IS₀, in a first extended position IS₁ in which the inward panel frame 131 defines an upper angle A_{U1}, and a second extended position IS₂ in which the inward panel frame 131 defines an upper angle A_{U2}. The outward panel frame 132 is shown in a collapsed position OS₀, in a first extended position OS₁ in which the outward panel frame 132 defines a lower angle A_{L1}, and a second extended position OS₁ in which the outward panel frame 132 defines a lower angle A _{L1}. The inward panel frame 131 is pivotal between the respective positions about the inward horizontal pivot axis IP_{H} by means of the upper pivot mechanism 141. The outward panel frame 132 is pivotal between the respective positions about the outward horizontal pivot axis OP_{H} by means of the lower pivot mechanism 142.

In the embodiment shown in figure 3 and 4, the base frame 110 is a two - component base frame, wherein the upper base frame part is 111 provided at an outwards end 111a thereof with an upper attachment portion 114, and wherein the lower base frame part 112 is provided at a top end 112a thereof with a lower attachment portion 116. The upper attachment portions 114 protrudes outwardly beyond the roof when the device 100 is positioned on the structure and the lower attachment portion protrudes upwardly above the roof when the device is positioned on the structure. The device is configured to mechanically releasably interconnect the upper and lower attachment portions - as shown, the device comprises releasable fasteners in the form of bolt and nut fasteners 120.

As shown in figure 4, the upper and lower attachment portions 114 and 116, respectively, are formed by complementary slanted portions 115,117 of the upper base frame part 111 and of the lower base frame part 112 respectively, which, when the device 100 is positioned on the structure 1, adjoin one another.

The upper and lower attachment portion 114 and 116 are provided with alignable holes for releasable fasteners for the bolt and nut fasteners 120.

As shown best in Figures 3-4, the horizontal width of the base frame 110 may be equal to or smaller than the horizontal width of the inward and outward panel frames 131, 132.

It is not shown in the figures, but may be easily envisaged therefrom, that the device 100, in particular the base frame 110 thereof, may in embodiments comprise lateral attachment portions that are provided with mounting elements for lateral attachment of multiple solar panel devices 100, for instance in the form of aligned bolt holes for bolt and nut fasteners, to form an assembly of multiple laterally juxtaposed devices 100. The multiple devices 100 may be laterally interconnected, preferably detachably interconnected, by means of adjoining lateral attachment portions provided with mounting elements, in particular aligned bolt holes, of the devices 100. The lateral attachment portions may be part of the base frames 110 of the devices 100, and/or of the panel frames 131, 132 thereof.

The device 100 is composed of, here consists of, two identical solar panel units 180 according to the invention.

One unit 180 is formed by the upper base frame part 111, the inward panel frame 131, the upper pivot mechanism 141 and the upper spacer member 150, and the other unit 180 is formed by the lower base frame part 112, the outwards panel frame 132, the lower pivot mechanism 143 and the lower spacer member 160.

The base frame parts of the two solar panel units 180 are mechanically, and releasably as preferred, interconnected at the corner 113 to form the device 100.

Figure 4 shows a detailed view of an example of the attachment.

As may be learned from the figures, the device 100 enables a method according to the invention for installing the solar panels 170 on the structure 1, wherein use is made of the device 100.

This method comprises firstly lifting, e.g. by means of a crane, a first unit 180 and placing this first unit 180 on the roof 2 of the structure 1. Thereafter, the method comprises lifting, e.g. by means of a crane, a second unit 180 and bringing this second unit 180 in an orientation, here a vertical orientation, along the sidewall 3 of the structure 1 and so that the lower base frame part 112 adjoins the upper base frame part 111 in the corner 113 of the base frame 110 - the corner 113 is positioned adjacent the corner region of the structure 1. A subsequent step is the releasable interconnection of the lower part 112 of the base frame 110 to the upper base frame part 111, so that the lower part 112 of the base frame 110 is suspended from the upper base frame part 111. The interconnection here, by way of example, encompasses the fastening of the bolt and nut fasteners 120 that interconnect the base frame parts.

The device 100 also allows for another installation method wherein instead of separately lifting the units 180 one after another and interconnecting them, the units 180 are interconnected prior to lifting and then the device is lifted as one piece onto the structure 1.

The installation may comprise, prior to or after lifting of separate units 180, or separate devices 100 of already interconnected units 180, laterally releasably interconnecting multiple devices 100, e.g. by fastening the bolt and nut fasteners of the lateral attachment portions of the base frame 110 and the panel frame parts 131, 132.

The device 100 enables to transport the units 180 of the device 100 with the panel frames 131, 132 in collapsed position, e.g. in a stack of units, e.g. on a lorry or trailer, e.g. from a storage to a construction site where the device is arranged on a structure, e.g. temporary building associated with the construction job or on a structure that is permanently erected at the site.

## Claims

1. Solar panel device (100) configured to be positioned on a structure (1) having a roof (2) and a side wall (3) adjoining said roof (2) in a corner region (2a) of the structure, wherein the solar panel device (100) comprises:
• a base frame (110) that is configured to be positioned on the structure (1) such that an upper part (111) of the base frame (110) extends along and is supported on the roof (2) of the structure (1), e.g. parallel therewith, and such that a lower part (112) of the base frame (110) extends along the side wall (3) of the structure (1), e.g. parallel therewith,
wherein the lower base frame part (112) adjoins the upper base frame part (111) in a corner (113) of the base frame, which corner (113) is embodied so that when the device (100) is positioned on the structure (1), the corner (113) of the base frame is adjacent the corner region (2a) of the structure, and so that the lower part (112) of the base frame is suspended from the upper base frame part (111),
• an inward panel frame (131) that is configured to retain, or that retains, one or more solar panels (170), the inward panel frame (131) being integral with, attached to or attachable to the upper base frame part (111) such that when the device (100) is positioned on the structure (1), the inward panel frame (131) extends above the roof (2) at an upper angle (Au) with the roof (2) away from the corner (113) of the base frame,
• an outward panel frame (132) that is configured to retain, or that retains, one or more solar panels (170), the outward panel frame (132) being integral with, attached to or attachable to the lower base frame part (112) such that when the device (100) is positioned on the structure (1), the outward panel frame (132) extends at a lower angle (Au) with the side wall (3) away from the corner (113) of the base frame.

2. Device according to claim 1, wherein the base frame (110) is a two-component base frame, wherein the upper base frame part (111) is provided at an outwards end (111a) thereof with an upper attachment portion (114), and wherein the lower base frame part (112) is provided at a top end thereof (112a) with a lower attachment portion (116), e.g. the upper attachment portion (114) protruding outwardly beyond the roof (2) when the device (100) is positioned on the structure (2) and the lower attachment portion (116) protruding upwardly above the roof (2) when the device (100) is positioned on the structure (1), wherein the device is configured to mechanically releasably interconnect the upper and lower attachment portions (114, 116), e.g. the device comprising releasable fasteners, e.g. bolt and nut fasteners, for said interconnection.

3. Device according to claim 2, wherein the upper and lower attachment portion (114, 116) are formed by complementary slanted portions (115, 117) of the upper base frame part (111) and of the lower base frame part (112) respectively, which, when the device is positioned on the structure, adjoin one another, e.g. arranged at a 45 degree angle relative to the main extension of the base frame part.

4. Device according to claim 2 or 3, wherein the upper and lower attachment portion (114, 116) are provided with alignable holes for releasable fasteners, e.g. for bolt and nut fasteners.

5. Device according to any one or more of claims 1 - 4, wherein the inward and/or outward panel frames (131, 132) are each attached to the respective base frame part (111, 112) by means of an upper and lower pivot mechanism (141, 143), respectively, e.g. a horizontal axis hinge (142, 144), such as to be pivotal relative to the base frame part about a respective horizontal pivot axis (PP_{H}) that extends parallel to the corner (113) of the base frame, e.g. in proximity of the corner of the base frame, in order to adjust the upper angle (Au) and/or lower angle (A_{L}), respectively.

6. Device according to any one or more of the preceding claims, wherein the device (100) comprises an upper spacer member (150) at a location horizontally spaced from the corner of the base frame, said upper spacer (150) extending between the inward panel frame (131) and the upper frame part (111), for maintaining a vertical spacing there between at that location, and therewith, maintaining the upper angle (Au),
wherein the device comprises a lower spacer member (160) at a location vertically spaced from the corner, extending between the outward panel frame (132) and the lower frame part (112) for maintaining a horizontal spacing there between at that location, and therewith, maintaining the lower angle (A_{L}).

7. Device according to at least claim 5, wherein the inward and outward panel frames (131, 132) are each pivotal by means of the pivot mechanism (140) into:
- an extended position thereof in which the inward or outward panel frame (131, 132) defines the upper or lower angle(Au, A_{L}), respectively, and
- a collapsed position in which the inward or outward panel frame (131, 132) is aligned with the upper or lower base frame part (111, 112), respectively.

8. Device according to any one or more of the preceding claims, wherein the device (100) comprises one or more of the following features:
- wherein the base frame (110) is configured such that, when the device is positioned on a structure with a horizontal roof (2) and a vertical side wall (3), the upper base frame part and the lower base frame part (111, 112) extend substantially perpendicular to each other, so that the base frame (110) aligns with the roof (2) and the side wall (3),
- wherein the device further comprises the one or more solar panels (170), the solar panels (170) being mounted on, or preferably within, the panel frames,
- wherein a horizontal width of the base frame (110) is equal to or smaller than the horizontal width (PW_{H}) of the panel frame,
- wherein at least for a device wherein a horizontal width of the base frame (110) is equal to or smaller than the horizontal width (PW_{H}) of the panel frame, the device, e.g. the base frame thereof, comprises lateral attachment portions that are provided with mounting elements for lateral attachment of multiple solar panel devices, e.g. releasable attachment, e.g. bolt holes, to form an assembly (200) of multiple laterally juxtaposed devices.

9. Device according to any one or more of the preceding claims, consisting of two solar panel units (180), wherein one unit is formed by the upper base frame part (111), the inward panel frame (131), and when present, the upper pivot mechanism (141) and the upper spacer member (15), and the other unit is formed by the lower base frame part (112), the outwards panel frame (132), and when present, the lower pivot mechanism (143) and the lower spacer member (160),
the two solar panel units (180) being interconnected or releasably interconnectable at the corner (113) to form the device (100),
wherein, preferably, the two solar panel units are identical.

10. Solar panel unit (180) for use in a device (100) according to claim 9, connectable to another solar panel unit (180) to form the device (100).

11. Assembly of multiple devices according to any one or more of claims 1 - 9, preferably for a device wherein a horizontal width of the base frame (110) is equal to or smaller than the horizontal width (PW_{H}) of the panel frame, wherein, preferably, the multiple devices (100) are laterally interconnected or interconnectable, e.g. detachably interconnected, by means of adjoining lateral attachment portions provided with mounting elements, e.g. aligned bolt holes, of the devices, e.g. lateral attachment portions of the base frames of the devices.

12. Method for installing one or more solar panels (170) on a structure (1) having a roof (2) and a side wall (3) adjoining the roof in a corner region (2a) of the structure, wherein use is made of the device according to any one or more of claims 1 - 9.

13. Method according to claim 12, wherein the device consists of two solar panel units (180), wherein one unit is formed by the upper base frame part (111), the inward panel frame (131), and when present, the upper pivot mechanism (141) and the upper spacer member (150), and the other unit is formed by the lower base frame part (112), the outwards panel frame (132), and when present, the lower pivot mechanism (142) and the lower spacer member (160),
and wherein the method comprises:
- lifting, e.g. by means of a crane, a first unit (180) and placing said first unit on the roof (2) of the structure (1),
- lifting, e.g. by means of a crane, the second unit (180), and bringing said second unit in an orientation along the sidewall (3) of the structure and so that the lower base frame part (112) adjoins the upper base frame part (111) in a corner (113) of the base frame (110), which corner is positioned adjacent the corner region (2a) of the structure,
- interconnecting, e.g. releasably interconnecting, the lower part (112) of the base frame to the upper base frame part (111), so that the lower part of the base frame is suspended from the upper base frame part.

14. Method according to claim 13, wherein the method comprises:
- transporting the units (180) of the device (100) with the frame panels (131, 132) in collapsed position thereof prior to lifting, and
- pivoting the inwards and/or outwards panel frames (131, 132) by means of the pivot mechanism (140) from the collapsed position into the extended position thereof.

15. A structure (1) having a roof (2) and a side wall (3) adjoining said roof in a corner region (2a) of the structure, wherein the structure is provided with a solar panel device (100) which comprises:
• a base frame (110) that is positioned on the structure such that an upper part (111) of the base frame extends along and is supported on the roof of the structure, e.g. parallel therewith, and such that a lower part (112) of the base frame extends along the side wall of the structure, e.g. parallel therewith,
wherein the lower base frame part adjoins the upper base frame part in a corner (113) of the base frame, which corner is embodied so that the corner of the base frame is adjacent the corner region (2a) of the structure, and so that the lower part of the base frame is suspended from the upper base frame part,
• an inward panel frame (131) that is configured to retain, or that retains, one or more solar panels (170), the inward panel frame being integral with, attached to or attachable to the upper base frame part such that the inward panel frame extends above the roof at an upper angle (A_{U}) with the roof away from the corner of the base frame,
• an outward panel frame (132) that is configured to retain, or that retains, one or more solar panels (170), the outward panel frame being integral with, attached to or attachable to the lower base frame part such that the outward panel frame extends at a lower angle (A_{L}) with the side wall away from the corner of the base frame,
wherein, preferably, the structure (1) is a portable and/or modular building, e.g. located at a construction site.
